(19) Europäisches Patentamt / European Patent Office / Office européen des brevets

(11) **EP 3 249 766 B1**

(12) **EUROPEAN PATENT SPECIFICATION**

(45) Date of publication and mention
of the grant of the patent:
**19.12.2018 Bulletin 2018/51**

(51) Int Cl.:
***H02G 7/16*** *(2006.01)*

(21) Application number: **16171627.9**

(22) Date of filing: **27.05.2016**

(54) **METHOD AND SYSTEM FOR MEASURING/DETECTING ICE OR SNOW ATMOSPHERIC ACCRETION ON OVERHEAD POWER LINES**

VERFAHREN UND SYSTEM ZUR MESSUNG/DETEKTION VON ATMOSPHÄRISCHER EIS- ODER SCHNEEANSAMMLUNG AUF FREILEITUNGEN

PROCÉDÉ ET SYSTÈME POUR MESURER/DÉTECTER L'ACCRÉTION ATMOSPHÉRIQUE DE GLACE OU DE NEIGE SUR DES LIGNES ÉLECTRIQUES AÉRIENNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2017 Bulletin 2017/48**

(73) Proprietor: **Ampacimon S.A.**
**4460 Grâce-Hollogne (BE)**

(72) Inventor: **GODARD, Bertrand**
**4100 Seraing (BE)**

(74) Representative: **Pronovem**
**Office Van Malderen**
**Parc d'affaires Zénobe Gramme- bâtiment K**
**Square des Conduites d'Eau 1-2**
**4020 Liège (BE)**

(56) References cited:
**US-A- 5 029 101      US-A- 5 235 861**
**US-A- 5 517 864      US-A1- 2007 271 081**
**US-B1- 6 343 515     US-B2- 8 184 015**

## Description

## Technical Field

The present invention relates to power engineering and particularly to a method and system or device for measuring/detecting atmospheric accretion of all possible types (ice, snow, wet snow, frost, etc. and any of their mixtures as for example rime icing), designated shortly hereinafter by ice accretion and/or atmospheric icing, with respect to a suspended span of cable of an overhead electrical power line. It also relates to the implementation of this method through a computer program or a memory carrier containing a computer-readable instruction set.

A real-time direct local measure/detection of ice accretion can be useful in a number of applications, and in particular for monitoring the transmission and distribution network since the accretion of ice, snow, wet snow, frost, etc. and their mixtures can lead to potential clearance violation, damage and power outages due to important static and/or dynamic mechanical overloads.

Atmospheric icing is a complex meteorological phenomenon and different meteorological conditions lead to a large variety of snow/ ice and their mixtures deposits. Ice loads can cause significant damage to electric power transmission networks, especially in combination with wind. Overhead lines can collapse due to the mass of ice deposits, but also additional loads in conductors and support structures induced by so-called galloping oscillation can cause significant damage to the structures. These transient dynamic forces can also cause the cables to swing toward each other and/or toward the towers. Clashing of conductors and flashovers are the most common problems of transmission lines galloping. Repeating power interruption caused by flashovers (as flashovers cause circuit breakers to open) obviously reduces the service quality and can damage the circuit breakers. And also the conductors can be damaged due to the clashing and flashovers. Ice shedding may have similar consequences than galloping. Sudden ice shedding generates strong cable motion and high/severe dynamic loads, which can cause severe damages to the transmission lines such as tower arm failure or even cascading failures of several towers. Moreover non-uniform ice accretion on a conductor in adjacent spans results in a longitudinal load at the supports. Such loading may be created either by a non-uniform ice accretion as a consequence of the line exposure or owing to ice shedding and can cause severe damage to the transmission line structures.

The method and system according to the present invention could also be used in other devices measuring sag and/or tension.

## Background

Currently, on-line monitoring is widely applied to monitor power lines. As explained in U.S. Patent No. 8,184,015, continuous monitoring of electrical power lines, in particular high-voltage overhead lines, is essential to timely detect anomalous conditions which could lead to a power outage. Measurement of power line spans between successive supports to determine whether the sag (clearance resp.) is lower (higher resp.) than an acceptable maximum (minimum resp.) value is becoming a mandatory requirement in some countries. Given the importance of power line monitoring, several devices and methods have been proposed to date in order to measure the sag and/or some other relevant parameters, either directly or indirectly related to sag. A number of different methods which perform sag measurement are known in prior art. According to some examples, sag of power lines monitoring can be performed by using models, weather models, measuring using image-processing and detection of a target installed on the conductor, measuring using a conductor replica attached to the tower to catch an assimilated conductor temperature without Joule effect, measuring the surface temperature of the phase conductor, measuring conductor tension, measuring using global positioning systems (GPS), measuring the angle of the conductor at the pole or at a location along span, measuring vibrations of the conductor, etc.

Indirect weather-based and/or model-based methods allow to determine sag from measured and/or simulated weather from models and corresponding estimated conductor temperature and supposed sag conditions. One drawback of these methods is that sag conditions are time changing, uncertain and not well-known in practice. These methods are not always capable of providing a correct picture of the situation. If for instance a snow or ice load appears on a line span, the calculation from weather to sag will be erroneous. Moreover, icing on structures highly depends on the temperature of these structures. In case of power lines, joule effect heats the conductor while weather conditions (mainly wind speed) at conductor location cool the conductor and must be adequately estimated. Due to local topology, this task may be very difficult. As joule heating and weather conditions are sensed by the conductor that determines its thermal equilibrium/temperature, point measurements of weather and in particular wind variables even taken in close proximity of the line remain inaccurate. The above comments and limitations are also valid for monitoring using a conductor replica attached to the tower to catch an assimilated conductor temperature without Joule effect.

Methods measuring the surface temperature of the phase conductor and methods measuring the angle of the conductor at the pole or at a location along span suffer from the same drawbacks: relation from temperature to sag can be uncertain and/or erroneous in case of icing and/or variations due to icing must be identified in sag variations along time using for example a temperature estimation.

Methods measuring sag using image processing and detection of a target installed on the conductor is sensitive to reduction of visibility induced by meteorological conditions, and in particular in case of ice fog and freezing fog.

A method measuring sag using global positioning systems (GPS), as detailed in U.S. Patent Application No. 2014/0064389 A1 does not give any information about ice overload.

U.S. Patent No. 5,235,861 and U.S. Patent No. 5,517,864 detail a power line monitoring using tension sensor measurement located at the pole. A drawback of this method is that relation from tension to sag can be uncertain and/or erroneous in case of icing because of unknown apparent conductor weight and/or variations due to icing must be identified in sag variations along time using for example a temperature estimation. The use of this tension installed/developed primarily for real-time ampacity rating also serves for observations of ice on conductors. As detailed in literature [2], the ice accretion can be determined by plots of tension versus net radiation temperature.

U.S. Patent No. 6,343,515 B1 details a method and apparatus to perform a measure of tension in any location along a wire. Other older patents as for example U.S. Patent No. 7,424,832 B1, use the same philosophy to measure the tension in a wire. As detailed in the cited patent, a deflection of the cable applied through the sensor produces a tangential force proportional to mechanical tension in the wire/cable. The deformation produced by the force is measured by an integrated strain gauge sensor. This sensor (output from strain gauge) must be calibrated to specific wire size and type. Commercial sensors, of which not-limitative illustrations are given in ref. [5] to [8], based on the corresponding method and apparatus detailed in the cited patents, are also available but these sensors are not directly usable in the domain of power lines domain since no attention was paid therein to high voltage constraints, as for example need for electromagnetic shielding of the monitoring electronics, anti-corona design, etc. Regarding ice monitoring of power lines, this tension-based method suffers from previously mentioned drawbacks as the fact that relation from tension to sag can be uncertain and/or erroneous in case of icing because of unknown apparent conductor weight, and/or variations due to icing must be identified in sag (tension) variations along time using for example a temperature estimation.

In another example, sag of power lines monitoring can be performed by measuring vibrations of the conductor as detailed in U.S. Patent No. 8,184,015. As detailed in the above-mentioned patent, sag is solely determined by the fundamental frequency estimation of the vibrations of the conductor.

Except for vibrations-based sag monitoring detailed is U.S. Patent No. 8,184,015, for which no external data such as topological data, conductor (and in particular apparent weight per unit length as explained further) or span data, weather data, or sagging conditions, etc., are needed for sag monitoring, all other methods exhibit at least some limitations in sag monitoring in case of ice loading periods as ice/snow or other accretion that build up on the conductor will increase the apparent diameter and weight of the conductor. In other words, the relation from measured parameters to sag is not known in case of atmospheric accretion. As a consequence, the previous methods, except in case of the vibrations-based method, can lead to errors in sag measurement due to atmospheric accretion and these methods eventually must be coupled to weather measurements/information to give data about ice-snow accretion conditions and/or conductor temperature (as conductor temperature is around 0°C in case of accretion) but there is no information about ice accretion. The needed weather conditions coming from models and/or weather stations may not be a good estimate of the real weather conditions at conductor location or height, and estimated conductor temperature along the line could be erroneous.

Previously, sag monitoring systems were directly related to dynamic line rating of power lines. Sag increase can be due to various factors, such as previously mentioned: change on current load, change on weather conditions, etc.. In order to distinguish between cases of increased sag for the line caused on the one hand by snow/ice loads and on the other hand by high line temperature due to current load and/or weather change, sag increase measurement is in practice set in connection with a conductor temperature measurement and/or a conductor temperature estimation since snow and/or ice load can occur at temperature around 0°C. Some functions have been built in to set threshold values for line temperature beforehand.

However, methods and systems which are not directly linked to dynamic line rating of power lines, and intended for measuring/detecting the potential ice thickness exist.

As explained in ref. [1], traditional methods of estimating icing conditions include video surveillance, non-contact infrared measurement, and temperature sensing at the line surface or core. As explained in ref. [1] as well, Bragg grating (FBG) sensing has exhibited a great potential in transmission line monitoring. Ref. [1] shows that icing monitoring can be achieved using FBG sensors. A drawback of such methods however is that the camera must be power supplied close to the power line. This method is sensitive to reduction of the visibility induced by meteorological conditions while indirect temperature-based and FBG methods is only a part of the solution. Indirect measurements are inaccurate since sag has to be deduced by algorithms which depend on unavailable and/or uncertain data (e.g. ice, wind loading) and/or uncertain models. Sag cannot thus be accurately determined by temperature or indirect measurements in case of atmospheric icing.

As explained for instance in ref. [3] and [9], icing and the thickness of the ice layer on an overhead power line can be determined by measuring interelectrode capacitance formed by two electrodes mounted on the surface of the conductor by exploiting the time signals and differences in the respective permittivities of air, ice and water. This is only a part of the monitoring of the power lines since sag cannot be determined.

Other methods can be found in prior art. For instance the ice load surveillance sensor IceMonitor™ (detailed in ref. [4]) measures ice growth deposit on structures. A drawback of this system is that the sensor is not taking into account the current in the power line and the real conductor temperature which can be dramatically different from that of the above-mentioned sensor. Indeed, icing appears at conductor temperature around 0°C and a small amount of current can lead to conductor temperature above the threshold of icing. Sag is not monitored at all and this specific ice monitor is only a part of the solution.

Most of the proposed methods measure some related parameters, which are then used to indirectly compute the overhead conductor sag. Sag variations due to icing must be identified by using a coupled temperature estimation since sag variations can be due to icing and/or change in conductor temperature (at high current for example).

## Summary of the Invention

A first aim of this disclosure is to provide a method for measuring/detecting accretion of ice-snow and/or their mixtures on power lines by measuring/detecting a change in the apparent weight per unit length of a conductor with respect to a suspended cable span which is due to accretion and which has a value reflective of the additional load of ice-snow and/or their mixtures on the entire suspended cable span.

The method according to claim 1 comprises the step of monitoring the sag of said suspended cable span over a first time interval, and the step of monitoring the mechanical tension of said suspended cable span during a second time interval, the first and the second time interval being usually the same or slightly different.

By measuring time evolution of both above-mentioned respective sag and tension, it becomes possible to determine accretion of ice, snow or mixtures thereof for which a change in apparent weight of conductor is observed. This method takes place with the device according to claim 9, the computer program according to claim 10 and the memory carrier according to claim 11.

## Brief Description of the Drawings

The invention may be more completely understood in consideration of the following detailed description of embodiments in connection with the accompanying drawings, in which:

- FIG. 1 is a schematic view of a power line with a plurality of spans of suspended electrically conductive cable and a system for measuring/detecting accretion of all possible atmospheric types (ice, snow, wet-snow, frost, etc. and mixtures thereof) with respect to a suspended span of cable.
- FIG. 2 is a side view of a span of the power line of FIG. 1
- FIG. 3 is a perspective view of particular embodiment for a sensor according to the present invention.
- FIG. 4 is a cross-sectional view of a particular embodiment of the monitoring device according to the invention, taken along a horizontal (top) and vertical (bottom) plane, respectively. An imposed deflection through a tension sensor is schematically highlighted.
- FIG. 5 is a graph showing, respectively, the evolution of sag (top) and tension (bottom) during a two-day period with no ice and negligible wind pressure.
- FIG. 6 is a graph showing the correlation from raw output obtained from tension sensors and sag obtained from vibration-based method.
- FIG. 7 is a graph illustrating the potential twist of the conductor by measuring (three-axis) acceleration of the conductor. Initial vertical axis acceleration goes from the opposite of the gravity to the gravity and comes back to the previous initial state.

While the invention is amenable to various modifications and alternative forms, specifics thereof have been shown by way of example in the drawings and will be described in detail. It should be understood, however, that the intention is not to limit aspects of the invention to the particular embodiments described. On the contrary, the intention is to cover all modifications, equivalents, and alternatives falling within the scope of the claims.

## Detailed Description

For the following defined terms, these definitions shall be applied, unless a different definition is given in the claims or elsewhere in this specification.

All numeric values are herein assumed to be preceded by the term "about", whether or not explicitly indicated.

The term "about" generally refers to a range of numbers that one of skill in the art would consider equivalent to the recited value (i.e. having the same function or result). In many instances, the term "about" may be indicative as including numbers that are rounded to the nearest significant figure.

Any recitation of numerical ranges by endpoints includes all numbers within that range (e.g., 1 to 5 includes a.o. 1, 4/3, 1.5, 2, e, 2.75, 3, $\pi$, 3.80, 4, and 5).

Although some suitable dimension ranges and/or values pertaining to various components, features and/or specifications are disclosed, one of skill in the art, incited by the present disclosure, would understand that desired dimensions, ranges and/or values may deviate from those expressly disclosed.

As used in this specification and in the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

The present disclosure relates to measuring/detecting accretions of all possible types (ice, snow, wet-snow, frost, etc. and the mixtures thereof) with respect to a suspended span of cable or for an electric power line comprising such a suspended cable span.

It may nevertheless have other applications in fields not directly related to electric power transmission.

The present invention provides a new method and device for detecting/measuring atmospheric accretion on power lines by means of two independent measures/methods, the results of which being complemented and combined. These two methods determine the apparent weight of conductor and corresponding amount of ice/snow (and their mixtures) on power lines:

(i) the measurement of the sag in the suspended span ; and
(ii) the measurement of the (local) tension of suspended span.

For a multiple-span section, the sensor according to the present invention has to be repeated on all spans or at least on spans intended to be monitored along the section.

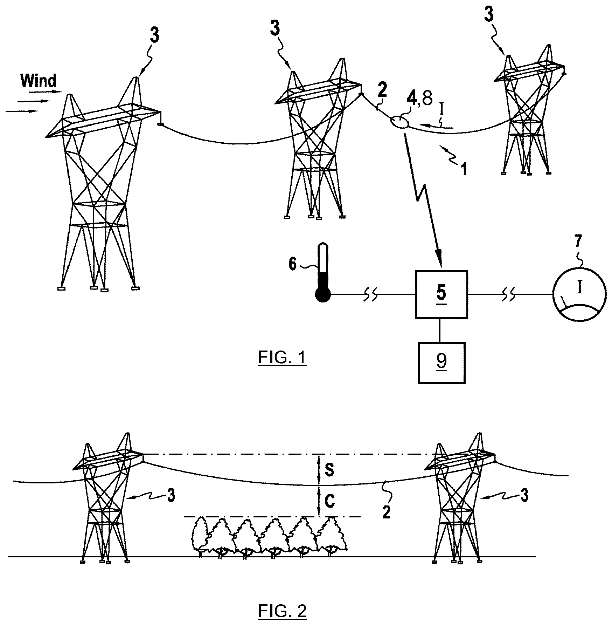

Figure 1 schematically depicts an overhead power line comprising a plurality of successive suspended spans 2 of electrically conductive cable 1 supported by pylons 3 through suspension chains. On each suspended cable span 2 intended to be monitored along the section is clamped an autonomous device 4, as disclosed for instance in above-mentioned U.S. Patent No. 8,184,015, comprising an accelerometer set suitable for monitoring motion in at least two axes perpendicularly to the cable and a transmitter for transmitting motion data obtained by this accelerometer set to a remote data processing unit 5. The autonomous device 4 may be inductively powered by the electric current I flowing through the power line cable 1. The illustrated system also comprises at least one ambient temperature sensor 6 and one electric current sensor 7 also connected to the remote data processing unit 5. The ambient temperature sensor 6 may be integrated within the autonomous device 4 or located within a general vicinity of the power line 1. The electric current sensor 7 may also be embedded within the autonomous device 4.
According to the present invention, an additional strain gauge 8 is further embedded in the autonomous device 4 for communicating local tension values 9 to the processing unit 5.

Each span 2 has a sag S which will increase with the temperature Tc of the cable, as thermal dilatation increases the length of cable between successive pylons 3. Increasing sag S of a suspended cable span generally decreases the clearance C of the cable with respect to the ground or any above ground obstacles, such as trees or buildings, as seen schematically on figure 2. It is however often required to maintain at least a critical minimum clearance C in order to prevent arcing from a suspended cable span of an overhead high-voltage power line.

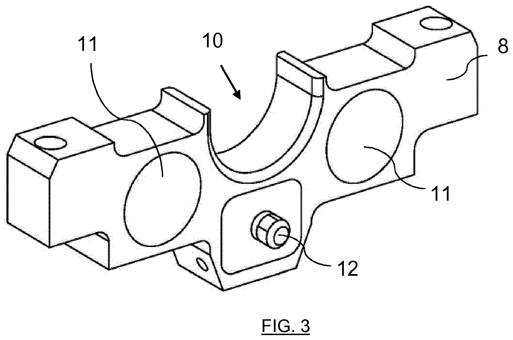

Figure 3 depicts an example of embodiment for the mechanical tension sensor 8 according to the present invention, comprising a cavity 10 for accommodating the electric cable and applying a deflection onto the cable. The cable deflection caused by the sensor device produces a tangential force which is proportional to the force exerted by the cable traction. On each side of this cavity 10 is a strain gauge 11 for measuring the tension caused by the deflection. Plug 12 is intended for connecting wires for power supply of the sensor as for recovering tension data.

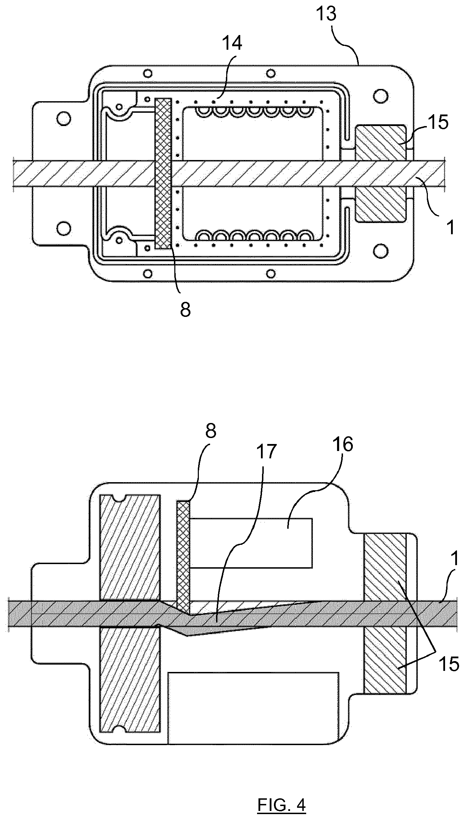

Figure 4 schematically shows how tension sensor 8 is embedded in an accelerometer set casing as described for example in US Pat. No. 8,184,015 B2.

In a purpose of analysis and explanation of the method, the computation and formulae are simplified by assuming a levelled span and uniform loading (i.e. conductor weight per unit length, ice and wind) along suspended cable. The sag of a suspended cable is well-known and well-defined in literature (see for example ref. [2]). It is given by the following parabola formula:

$$D = \frac{wL^2}{8H} \qquad (1)$$

where D [m] is the sag, H [N] is the mechanical tension and L [m] is the span length, $w$ [N/m] is the resultant force of conductor weight, wind pressure and ice loading, per unit length, given by

$$w = \sqrt{(w_c + w_{ice})^2 + w_{wind}^2} \qquad (2)$$

where $w_c$ [N/m] is the weight of conductor per unit length, $w_{wind}$[N/m] is the pressure due to wind and $w_{ice}$ [N/m] is the potential additional weight due to any accretion (like ice loading) ; $w_{ice}$ and $w_c$ are acting in a vertical plane and $w_{wind}$ is acting on a horizontal plane. In case of no accretion and no wind, the resultant weight per unit length is equal to conductor weight per unit length; mathematically speaking, one has then $w = w_c$.

By measuring/determining both above-mentioned sag and tension, it becomes possible to determine the change in conductor apparent weight due to ice. Using equation (1) and equation (2), we see that the product of both above-mentioned sag D and tension H gives a coefficient p which is directly linked to the total resultant weight per unit length

$$D\,H = p = \frac{wL^2}{8} = \frac{L^2}{8}\sqrt{(w_c + w_{ice})^2 + w_{wind}^2} = \frac{w_c L^2}{8}\sqrt{\left(1 + \frac{w_{ice}}{w_c}\right)^2 + \left(\frac{w_{wind}}{w_c}\right)^2} \qquad (3)$$

First consider the case with either no wind or negligible pressure due to wind for simplicity. Equation (3) becomes

$$D\,H = \frac{wL^2}{8} = \frac{L^2}{8}\sqrt{(w_c + w_{ice})^2} = \frac{(w_c + w_{ice})L^2}{8} = \frac{w_c L^2}{8}\left(1 + \frac{w_{ice}}{w_c}\right) \qquad (4)$$

Noting $\frac{d}{dt}$ [1/s] the time derivation of equation (4) and noting that conductor weight $w_c$ and span length $L$ are constant over time, the rate of accretion is given by

$$\frac{d}{dt}(D\,H) = \frac{L^2}{8}\frac{dw_{ice}}{dt} \qquad (5)$$

Sag D and tension H can be obtained in different ways. Although wind and corresponding wind pressure can be estimated using vibrations-based method as detailed in patent application WO 2014/090416 A1, wind pressure $w_{wind}$ is generally negligible compared to conductor weight per unit length and potentially problematic ice overload.

Vibration-based measurement as detailed in U.S. Patent No. 8,184,015 B2 is preferably used since sag is determined hereby without need of data and in particular of data such as extra weight due to ice or snow accretion.

According to the invention, a local tension measurement using an imposed deflection of the cable inside the sensor (figure 4) at sensor location is preferably used since there is no need to uncouple conductor from tower during installation as it is done using tension measurement at tower location. Local tension measurement from imposed deflection of wire/cable gives a relation from raw outputs from strain gauges to real tension in wire which must be calibrated to specific wire size and type before installation.

Local tension can be measured at a suitable high sampling frequency, a few tens of hertz , for example 25 [Hz], just like the accelerations, while sag determination needs a few minutes, depending on sampling frequency of accelerations and frequency resolution needed, due to frequency analysis of the accelerations measured at this high frequency sampling. Thus, in some embodiments, tension and sag may at times cover time periods slightly different.

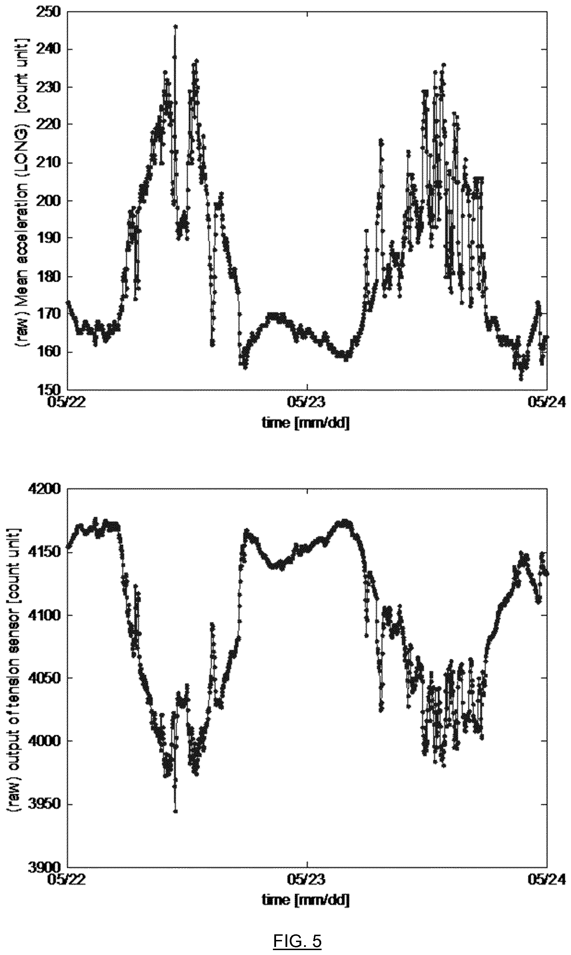

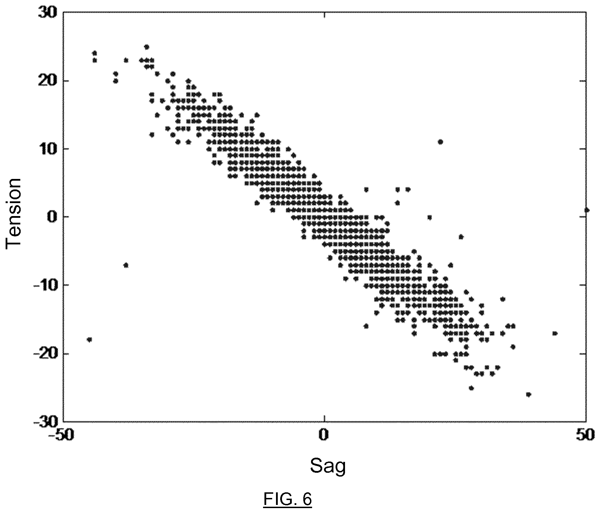

However, it is intended to use the fact that vibration-based sag measurement determines sag (or fundamental frequency) without the need of any data. Such properties may also be used to determine many other features. As vibration-based sag measurement is obtained without the need of any data, raw tension sensor output can be fit, using equation (1), to sag in case of period of no accretion, for example during summer, with high ambient temperature, etc., with no need of calibration of the sensor before installation (raw tension and acceleration data respectively shown in figure 5). Such a good correlation is shown in figure 6, which corresponds to data collected during about one month (from 2014.05.22 to 2014.06.18).

As wet snow accretes on a conductor, it tends to twist it and so to expose a fresh conductor surface for further accretion. Thus conductors that have low torsional rigidity can have higher ice loads.

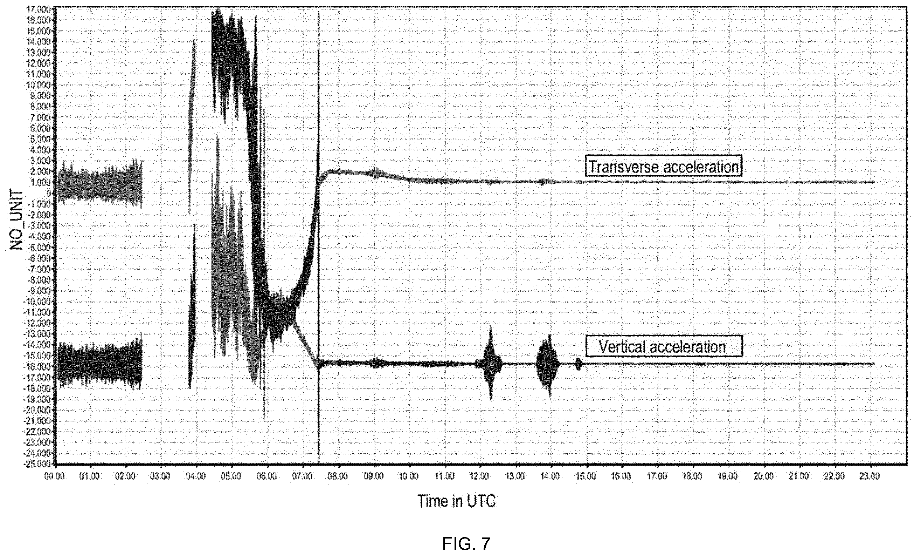

In long single conductor spans, the eccentric weight of the deposit may be large enough to significantly twist the conductor. Since the conductor span is fixed against rotation at the ends, this eccentric ice load will twist the conductor most at mid-span and the angle of twist will become progressively smaller going from mid-span towards the supports. Bundled conductors have higher rotational stiffness than single conductors which leads to differences in ice accumulation and shedding. Anti-torsion devices like counterweights, detuning pendulum or spacers can reduce the amount (and shape) of snow deposit and even accelerate the snow shedding. As a consequence the observed twist, as illustrated on figure 7, depends on the span's configuration (single conductor, bundled conductors, interphase spacers, detuning pendulums, etc.) and depends on measurement sensor location along the span.

As vibration-based sensor as detailed in U.S. Patent No. 8,184,015 B2 measures three-axis (static and dynamic) vibrations of conductor, this twist can be measured/observed. This is an additional information that can be advantageously used in the determination of potential ice accretion (see figure 7).

The method according to the invention has several advantages over the methods proposed in the art since sag and icing is simultaneous monitored without need of any, otherwise unavailable and/or uncertain, data or uncertain models.

Reference symbols

1.   overhead power line cable (without deflection)
2.   span
3.   pylon
4.   autonomous sensing device
5.   processing unit
6.   temperature measurement
7.   electric current measurement
8.   internal tension sensor device
9.   mechanical tension measurement
10.   cavity
11.   strain gauge
12.   plug for power supply and tension data recovery
13.   external housing
14.   internal housing
15.   insulation
16.   energy storage means (battery, capacitors)
17.   cable portion deflected by internal sensor device

REFERENCES

[1] Min Zhang, Yimeng Xing, Zhiguo Zhang and Qiguan Chen, Design and Experiment of FBG-Based Icing Monitoring on Overhead Transmission Lines with an Improvement Trial for Windy Weather, Sensors 2014, 14, 23954-23969; doi:10.3390/s141223954

[2] F. Kiessling et al, Overhead Power Lines, Planning, Design, Construction, Springer, 2003.

[3] Moser, M.J., George, B. ; Zangl, H. ; Brasseur, G., Icing detector for overhead power transmission lines, Instrumentation and Measurement Technology Conference, 2009. I2MTC '09. IEEE, pp 1105 - 1109.

[4] http://www.combitech.se/

[5] http://www.powerlimit.be/ http://www.powerlimit.be/files/uploads/HF32.pdf

[6] https://www.tensitron.com/ https://www.tensitron.com/product/acx-1

[7] http://www.briceaust.com.au/DillonQCTM

[8] http://www.cooperinstruments.com/best-sellers/wire-tension-meters/

[9] http://russianpatents.com/patent/220/2209513.html

**Claims**

1. A method for detecting and/or measuring atmospheric accretion on a suspended electrical cable span (2) of overhead power lines, by using the device of claim 9, said suspended electrical cable span (2) having a sag (D) and a local tension (H), and being submitted to wind pressure ($w_{wind}$), comprising the steps of independently :

   - measuring said sag (D), and measuring said wind pressure ($w_{wind}$), over a first given time range,
   - measuring said local tension (H) over a second given time range,

   the results of both steps being complemented and/or combined, so that to allow atmospheric accretion detection and/or measurement.

2. The method according to Claim 1, wherein atmospheric accretion comprises ice, snow, wet snow, frost and the mixtures thereof.

3. The method according to Claim 1, wherein the first given time range and the second given time range are the same.

4. The method according to Claim 1, wherein the step of measuring the sag (D) of the suspended span (2) is solely obtained by the determination of the fundamental frequency of the electrical cable (1) oscillations.

5. The method according to Claim 1, wherein the accretion loading by unit length $w_{ice}$ [N/m] is given by

$$DH = \frac{w_c L^2}{8} \sqrt{\left(1 + \frac{w_{ice}}{w_c}\right)^2 + \left(\frac{w_{wind}}{w_c}\right)^2},$$

   where D [m] is the sag, H[N] is the local mechanical tension and L[m] is the length of the span, $w_c$ [N/m] is the conductor weight per unit length and $w_{wind}$ [N/m] is the wind pressure per unit length.

6. The method according to Claim 5, wherein, in case of negligible wind pressure, the accretion loading by unit length $w_{ice}$ [N/m] is given by

$$DH = \frac{w_c L^2}{8} \left(1 + \frac{w_{ice}}{w_c}\right).$$

7. The method according to Claim 1, wherein the change of accretion load, and further the change of apparent weight of span (2) due to accretion, over time, is given by :

$$\frac{d}{dt}(DH) = \frac{L^2}{8} \frac{dw_{ice}}{dt}.$$

8. The method according to Claim 4, wherein raw tension output data are fitted over the given time range to sag data determined by the method of oscillations fundamental frequency, said time range corresponding to a period with no atmospheric accretion and negligible wind, so that no further calibration is needed for converting raw tension output to actual tension.

9. A device (4) for detecting and/or measuring atmospheric accretion on a suspended electrical cable span (2) of overhead power lines, by carrying out the method according to anyone of the preceding claims, comprising a casing (13, 14) to be traversed by the cable (1), a three-axis accelerometer and a local and internal tension sensor device (8), **characterised in that** the internal tension sensor device (8) is adapted to impose a deflection to the cable portion traversing the casing (13, 14), to yield a deflected cable portion (17), and to provide resulting output strain gauge measurements.

10. Computer program for implementing a method according to anyone of Claims 1 to 8 when executed by a data processing device (5) connected to a device according to claim 9.

11. Memory carrier containing a computer-readable instruction set for implementing a method according to any one of Claims 1 to 8 when executed by a data processing device (5) connected to a device according to claim 9.

**Patentansprüche**

1. Verfahren zum Erkennen und/oder Messen von witterungsbedingtem Anwuchs an einer hängenden Elektrokabelstrecke (2) von Freilandleitungen durch Verwendung der Vorrichtung von Anspruch 9, wobei die hängende Elektrokabelstrecke (2) einen Durchhang (D) und eine örtliche Spannung (H) aufweist und Winddruck ($w_{wind}$) ausgesetzt ist, umfassend die Schritte des unabhängigen:

   - Messens des Durchhangs (D) und Messens des Winddrucks ($w_{wind}$) über einen ersten gegebenen Zeitbereich,
   - Messens der örtlichen Spannung (H) über einen zweiten gegebenen Zeitbereich,

   wobei die Ergebnisse beider Schritte derart ergänzt und/oder kombiniert werden, dass eine Erkennung und/oder Messung von witterungsbedingtem Anwuchs ermöglicht wird.

2. Verfahren nach Anspruch 1, wobei der witterungsbedingte Anwuchs Eis, Schnee, Nassschnee, Frost und die Mischungen daraus umfasst.

3. Verfahren nach Anspruch 1, wobei der erste gegebene Zeitbereich und der zweite gegebene Zeitbereich der gleiche sind.

4. Verfahren nach Anspruch 1, wobei der Schritt des Messens des Durchhangs (D) der hängenden Strecke (2) allein durch die Bestimmung der Grundfrequenz der Schwingungen des Elektrokabels (1) erzielt wird.

5. Verfahren nach Anspruch 1, wobei die Last des Anwuchses pro Längeneinheit $w_{ice}$ [N/m] gegeben ist durch:

$$DH = \frac{w_c L^2}{8} \sqrt{\left(1 + \frac{w_{ice}}{w_c}\right)^2 + \left(\frac{w_{wind}}{w_c}\right)^2},$$

   wobei D [m] der Durchhang ist, H[N] die örtliche mechanische Spannung ist und L[m] die Länge der Strecke ist, $w_c$ [N/m] das Leitergewicht pro Längeneinheit ist und $w_{wind}$ [N/m] der Winddruck pro Längeneinheit ist.

6. Verfahren nach Anspruch 5, wobei im Fall vernachlässigbaren Winddrucks die Last des Anwuchses pro Längeneinheit $w_{ice}$ [N/m] gegeben ist durch:

$$DH = \frac{w_c L^2}{8} \left(1 + \frac{w_{ice}}{w_c}\right).$$

7. Verfahren nach Anspruch 1, wobei die Veränderung der Last des Anwuchses und ferner der Veränderung des scheinbaren Gewichts der Strecke (2) infolge von Anwuchs im Zeitverlauf gegeben ist durch:

$$\frac{d}{dt}(DH) = \frac{L^2}{8}\frac{dw_{ice}}{dt}.$$

8. Verfahren nach Anspruch 4, wobei Spannungsrohausgabedaten über den gegebenen Zeitbereich an Durchhangdaten angepasst werden, die durch das Verfahren der Grundschwingungsfrequenz bestimmt werden, wobei der Zeitbereich einer Periode ohne witterungsbedingten Anwuchs und mit vernachlässigbarem Wind entspricht, so dass zum Umwandeln der Spannungrohausgabe in tatsächliche Spannung keine weitere Kalibrierung erforderlich ist.

9. Vorrichtung (4) zum Erkennen und/oder Messen von witterungsbedingtem Anwuchs an einer hängenden Elektrokabelstrecke (2) von Freilandleitungen durch Ausführen des Verfahrens nach einem der vorhergehenden Ansprüche, ein Gehäuse (13, 14) umfassend, das von dem Kabel (1) durchquert wird, einen Drei-Achsen-Beschleunigungsmesser und eine örtliche und interne Spannungssensorvorrichtung (8), **dadurch gekennzeichnet, dass** die interne Spannungssensorvorrichtung (8) dafür eingerichtet ist, ein Durchbiegen des Kabelabschnitts zu bewirken, der das Gehäuse (13, 14) durchquert, um einen durchgebogenen Kabelabschnitt (17) zu erzielen und um entstandene Dehnungsmesser-Ausgabemessungen bereitzustellen.

**10.** Computerprogramm zum Umsetzen eines Verfahrens nach einem der Ansprüche 1 bis 8, wenn ausgeführt durch eine Datenverarbeitungsvorrichtung (5), die mit einer Vorrichtung nach Anspruch 9 verbunden ist.

**11.** Speicherträger, einen computerlesbaren Befehlssatz zum Umsetzen eines Verfahrens nach einem der Ansprüche 1 bis 8 enthaltend, wenn ausgeführt durch eine Datenverarbeitungsvorrichtung (5), die mit einer Vorrichtung nach Anspruch 9 verbunden ist.

**Revendications**

**1.** Procédé pour détecter et/ou mesurer l'accrétion atmosphérique sur une portée de câble électrique suspendu (2) de lignes électriques aériennes, en utilisant le dispositif de la revendication 9, ladite portée de câble électrique suspendu (2) présentant une flèche (D) et une tension locale (H), et étant soumise à une pression due au vent ($w_{wind}$), comprenant les étapes indépendantes de:

   - mesurer ladite flèche (D) et mesurer ladite pression du vent ($w_{wind}$) dans une première plage de temps donnée,
   - mesurer ladite tension locale (H) dans une deuxième plage de temps donnée,

les résultats de ces deux étapes étant complétés et/ou combinés de manière à permettre la détection et/ou la mesure de l'accrétion atmosphérique.

**2.** Procédé selon la revendication 1, **caractérisé en ce que** l'accrétion atmosphérique comprend la glace, la neige, la neige humide, le givre et des mélanges de ceux-ci.

**3.** Procédé selon la revendication 1, **caractérisé en ce que** la première plage de temps donnée et la deuxième plage de temps donnée sont identiques.

**4.** Procédé selon la revendication 1, **caractérisé en ce que** l'étape de mesure de la flèche (D) de la portée de câble suspendu (2) est obtenue uniquement en déterminant la fréquence fondamentale des oscillations du câble électrique (1) .

**5.** Procédé selon la revendication 1, **caractérisé en ce que** la charge d'accrétion par unité de longueur $w_{ice}$ [N/m] est donnée par

$$DH = \frac{w_c L^2}{8} \sqrt{\left(1 + \frac{w_{ice}}{w_c}\right)^2 + \left(\frac{w_{wind}}{w_c}\right)^2},$$

où D[m] est la flèche, H[N] est la tension mécanique locale et L[m] est la longueur de la portée de câble, $w_c$[N/m] est le poids de conducteur par unité de longueur et $w_{wind}$[N/m] est la pression du vent par unité de longueur.

**6.** Procédé selon la revendication 5, **caractérisé en ce que**, dans le cas d'une pression du vent négligeable, la charge d'accrétion par unité de longueur $w_{ice}$[N/m] est donnée par

$$DH = \frac{w_c L^2}{8} \left(1 + \frac{w_{ice}}{w_c}\right).$$

**7.** Procédé selon la revendication 1, **caractérisé en ce que** le changement de la charge d'accrétion, et en outre le changement du poids apparent de la portée de câble (2) du fait de l'accrétion, dans le temps, sont donnés par :

$$\frac{d}{dt}(DH) = \frac{L^2}{8} \frac{dw_{ice}}{dt}.$$

**8.** Procédé selon la revendication 4, **caractérisé en ce que** des données brutes de sortie de tension sont ajustées dans la plage de temps donnée à des données de flèche déterminées par le procédé de la fréquence fondamentale des oscillations, ladite plage de temps correspondant à une période sans accrétion atmosphérique et avec un vent négligeable, de sorte qu'aucun étalonnage supplémentaire ne soit nécessaire pour convertir une sortie de tension brute en une tension réelle.

**9.** Dispositif (4) pour détecter et/ou mesurer une accrétion atmosphérique sur une portée de câble électrique suspendu (2) de lignes électriques aériennes, en mettant en oeuvre le procédé selon l'une quelconque des revendications précédentes, comprenant un boîtier (13,14) devant être traversé par le câble (1), un accéléromètre à trois axes et un dispositif formant capteur de tension local et interne (8), **caractérisé en ce que** le dispositif formant capteur de tension interne (8) est adapté pour imposer une déflexion à la partie de câble traversant le boîtier (13,14) pour produire une partie de câble défléchie (17), et pour fournir les mesures de jauge de contrainte de sortie résultantes.

**10.** Programme d'ordinateur destiné à mettre en oeuvre un procédé selon l'une quelconque des revendications 1 à 8 lorsqu'il est exécuté par un dispositif de traitement de données (5) connecté à un dispositif selon la revendication 9.

**11.** Support de mémoire comprenant un jeu d'instructions sur support informatique pour mettre en oeuvre un procédé selon l'une quelconque des revendications 1 à 8 lorsqu'il est exécuté par un dispositif de traitement de données (5) connecté à un dispositif selon la revendication 9.

FIG. 1

FIG. 2

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8184015 B
- US 20140064389 A1
- US 5235861 A
- US 5517864 A
- US 6343515 B1
- US 7424832 B1
- US 8184015 B2
- WO 2014090416 A1

### Non-patent literature cited in the description

- **MIN ZHANG ; YIMENG XING ; ZHIGUO ZHANG ; QIGUAN CHEN.** Design and Experiment of FBG-Based Icing Monitoring on Overhead Transmission Lines with an Improvement Trial for Windy Weather. *Sensors,* 2014, vol. 14, 23954-23969
- **F. KIESSLING et al.** Overhead Power Lines, Planning, Design, Construction. Springer, 2003
- Icing detector for overhead power transmission lines. **MOSER, M.J. ; GEORGE, B. ; ZANGL, H. ; BRASSEUR, G.** Instrumentation and Measurement Technology Conference, 2009. I2MTC '09. IEEE, 2009, 1105-1109